## Europäisches Patentamt
## European Patent Office
## Office européen des brevets

(19)

(11) Veröffentlichungsnummer: **0 072 785**
**B1**

(12) # EUROPÄISCHE PATENTSCHRIFT

(45) Veröffentlichungstag der Patentschrift:
**17.12.86**

(51) Int. Cl.⁴: **B 65 D 75/26**, B 32 B 7/04

(21) Anmeldenummer: **82890106.6**

(22) Anmeldetag: **26.07.82**

(54) Packung für festes Verpackungsgut sowie Verfahren zu deren Herstellung.

(30) Priorität: **11.08.81 AT 3521/81**

(43) Veröffentlichungstag der Anmeldung:
**23.02.83 Patentblatt 83/8**

(45) Bekanntmachung des Hinweises auf die Patenterteilung:
**17.12.86 Patentblatt 86/51**

(84) Benannte Vertragsstaaten:
**AT BE CH DE FR GB IT LI NL SE**

(56) Entgegenhaltungen:
**CH-A-284 973**
**FR-A-2 057 882**
**US-A-3 935 810**

(73) Patentinhaber: **FOLIENWALZWERK BRUEDER TEICH AKTIENGESELLSCHAFT, A-3200 Obergrafendorf- Mühlhofen (AT)**

(72) Erfinder: **Jud, Wilfried, Dr., Kranzbichlerstrasse 41/11/86, A-3100 St. Poelten (AT)**

(74) Vertreter: **Stampfer, Heinz, ISOVOLTA Österreichische Isolierstoffwerke AG Industriezentrum- Süd, A-2351 Wiener Neudorf (AT)**

EP 0 072 785 B1

## Beschreibung

Die Erfindunq betrifft eine Packung für Schokolade in Form einer Schlauchbeutelpackung, bei welcher - wie bei Schlauchbeutelpackungen üblich - zur Bildung einer Packungshülle die Ränder des Verpackungsmaterials an den durch Siegelnähte hergestellten Flossen und/oder Finnen des Schlauchbeutels miteinander verbunden sind. Sie betrifft ferner ein Verfahren zur Herstellung einer solchen Packung.

Zur Herstellung einer Schlauchbeutelpackung dieser Art, wie sie z.B. in der internationalen Patentanmeldung WD/ 02827 beschrieben ist, wird eine mit einer Siegelungsschicht versehene Verpackung-smaterialbahn um die zugeführten Schokoladetafeln gefaltet und unter Bildung einer Längssieqelungsnaht ein Schlauch geformt, wobei sich an der Stelle der Siegelungsnaht ein als Finne bezeichneter Dopplungsbereich des Verpackungsmaterials bildet, der anschließend auf die Schlauchoberfläche umgeschlagen wird. Dieser Verpackungsmaterialschlauch wird dann zwischen aufeinanderfolgenden Schokoladetafeln mit Quersiegelungsnähten versehen und durch Durchtrennen des Schlauchmaterials an diesen quersiegelungsnähten in Einzelpackungen aufgeteilt, wobei die durch die Quersiegelungsnähte erzeugten Dopplungsbereiche des Verpackungsmaterials in Form von Flossen von der Packungshülle abstehen.

Packungen für Schokolade werden aber derzeit überwiegend nicht als Schlauchbeutelpackungen ausgeführt, sondern es wird z.B. die Schokoladetafel zuerst zwecks Bildung einer inneren Packungshülle in ein erstes flächiges und faltbares Verpackungsmaterial, z.B. in eine Aluminiumfolie oder einen Aluminiumfolienverbund, eingeschlagen und danach mit einer in den meisten Fällen aus Papier bestehenden äußeren Packungshülle versehen.Diese äußere Packungshülle wird dabei insbesondere in Form einer Schleife oder durch Einschlagen der mit der inneren Packungshülle versehenen Schokoladetafel in dem Material der äußeren Packungshülle angebracht.

Ein Grund dafür, daß man bei solchen Schokoladepackungen eine zweite äußere Packungshülle anbringt, liegt hauptsächlich darin, daß die innere, z.B. aus einer dünnen Aluminiumfolie bestehende Packungshülle, die Tendenz zeigt, sich an die Oberfläche der Schokoladetafel eng anzuschmiegen, so daß sich die Oberflächenform der Schokoladetafel, insbesondere ihre Vertiefungen, wie die Riegelkerben oder dgl., durch das dünne Folienmaterial durchdrückt und ohne die zweite äußere Packungshülle in ungewünschter Weise von außen zu erkennen wäre.

Als weiterer Grund für das Vorsehen einer zweiten äußeren Packungshülle wäre zu nennen, daß das eine größere Dicke aufweisende Material der äußeren Packungshülle, also z.B. Papier, unproblematischer bedruckt bzw. mit einer sonstigen Aufmachung versehen werden kann als das dünne Material der inneren Packungshülle.

Das genannte bekannte Verfahren, bei dem das Verpackungsgut, z.B. eine Schokoladetafel nacheinander mit zwei Einschlagpackungshüllen versehen wird, ist nun maschinentechnisch sehr aufwendig und relativ langsam. Außerdem können solche Einschlagpackungshüllen nicht gasdicht ausgeführt werden.

Die Erfindung, wie sie in den Ansprüchen gekennzeichnet ist, löst die Aufgabe, eine Packung für Schokolade in Form einer Schlauchbeutelpackung so auszubilden, daß die vollständige Oberflächenform der Schokoladetafel, insbesondere ihre Vertiefungen, wie die Riegelkerben und dgl. von außen nicht zu erkennen sind. Die erfindungsgemäße Schokoladenpackung gemäß Anspruch 7 ist dadurch gekennzeichnet, daß die Packungshülle aus zwei Hüllenlagen besteht, die nur in Teilbereichen, jedenfalls aber im Bereich der Flossen und/oder Finnen flächig miteinander verbunden sind, in anderen Teilbereichen aber nicht aneinander anliegen. Dies führt dazu, daß die äußere Hüllenlage Vertiefungen in der Oberfläche der Schokoladetafel-Oberfläche, die nur kleinere Oberflächenbereiche einnehmen, wie den Riegelkerben oder dlg. nicht folgt und diese Vertiefungen daher dann auch von außen nicht zu erkennen sind.

Packungen, bei denen die Packungshülle aus zwei übereinanderliegenden Hüllen aufgebaut ist, sind aus der FR,A-2 057 882 bekannt. Die Packungshülle besteht dabei aus zwei Kunststoffolien-Abschnitten, zwischen welchen das Verpackungsgut aufgenommen wird und die an den Rändern miteinander verbunden werden. Die beiden Abschnitte weisen dabei jeweils eine mit Bezug auf das Verpackungsgut selbstklebende innere Folie auf, die sich an das Verpackungsgut anschmiegt und eine äußere mechanisch stärkere Folie, welche beim Verpackungsvorgang - z.B. durch Hitzeeinwirkung - derart auf die innere Folie aufgeschrumpft oder an diese angelegt wird, daß die in der Packung befindliche Luft zum größten Teil entfernt wird. Eine solche Packung ist aber für Schokolade nicht brauchbar.

Die Erfindung löst ferner die Aufgabe, ein Verfahren zur Herstellung dar erfindungsgemäßen Packungen anzugeben, welches mit relativ einfachen Hilfsmitteln und großem. Durchsatz arbeitet.

Im folgenden wird die Erfindung anhand von lediglich einen Ausführungsweg darstellenden Zeichnungen näher erläutert.

Es zeigen:

Die Figuren 1 und 2 im Schnitt bzw. in der Aufsicht das zur Herstellung der erfindungsgemäßen Packungen dienende Packungsmaterial, wobei in der Schnittdarstellung nach Fig.i die Materialstärkan zur bassaran Ubarsichtlichkeit übertrieben dick dargestellt sind.

Figur 3 ainan eine Flosse enthaltenden Teilbereich dar erfindungsgemäßen Packung im Schnitt.

Das zur Herstellung der erfindungsgemäßen Packung dienende zweilagige Verpackungsmaterial weist eine Papierbahn 1 auf mit einem Flächengewicht von etwa 70 $g/m^2$ und eine Breite $a_o$ (siehe Fig. 2), welche ein ganzzahliges Vielfaches der Breite a der für die Schlauchbautalherstellung einzusetzenden Verpackungsmaterialbahn beträgt, welche Papierbahn I in den durch die Abmessungen a bzw. b definierten rechteckigen Feldern auf der nach außen zu liegen kommenden Seite mit einem Aufdruck 2 und - hierzu registriergerecht auf der anderen Seite in Bereichen 3 (siehe Fig. 2) nach art einer Fassonkaschierung mit einer Heißkleberbeschichtung 4 (Hotmelt) von etwa 10-15 $g/m^2$ versehen ist. Gegen diese, bei der herzustellenden Schlauchbeutelpackung die äußere Hüllenlage der Packungshülle bildende Papierbahn 1 ist mithilfe der Heißkleberbeschichtung 4 ein bei der späteren Schlauchbeutelpackung als innere Hüllenlage dienendes Verbundmaterial 5 ankaschiert. Dieses Verbundmaterial 5 besteht aus einer Aluminiumfolie 6 einer Stärke von etwa 0,007 bis 0,009 mm, welche an einer Seite gegen eine dünne Papierbahn 7 und an der anderen Seite mit einer Kaltkleberbeschichtung 8 versehen ist.

Die Bereiche 3, an denen die Papierbahn 1 und das Verbundmaterial 5 mithilfe der Heißkleberbeschichtung 4 miteinander verbunden sind, stimmen dabei nun mit jenen Flächenbereichen des zweilagigen Verpackungsmaterials überein, an denen bei der herzustellenden Schlauchbeutelpackung die Flossen und/oder Finnen zu liegen kommen.

Das vorstehend beschriebene zweilagige Verpackungsmaterial wird nun längs den Linien 9 (Fig. 2) in Bahnen der Breite a unterteilt und in üblicher Weise z.B. zur Hertstellung von Schlauchbeutelpackungen für Schokoladetafeln verwendet.

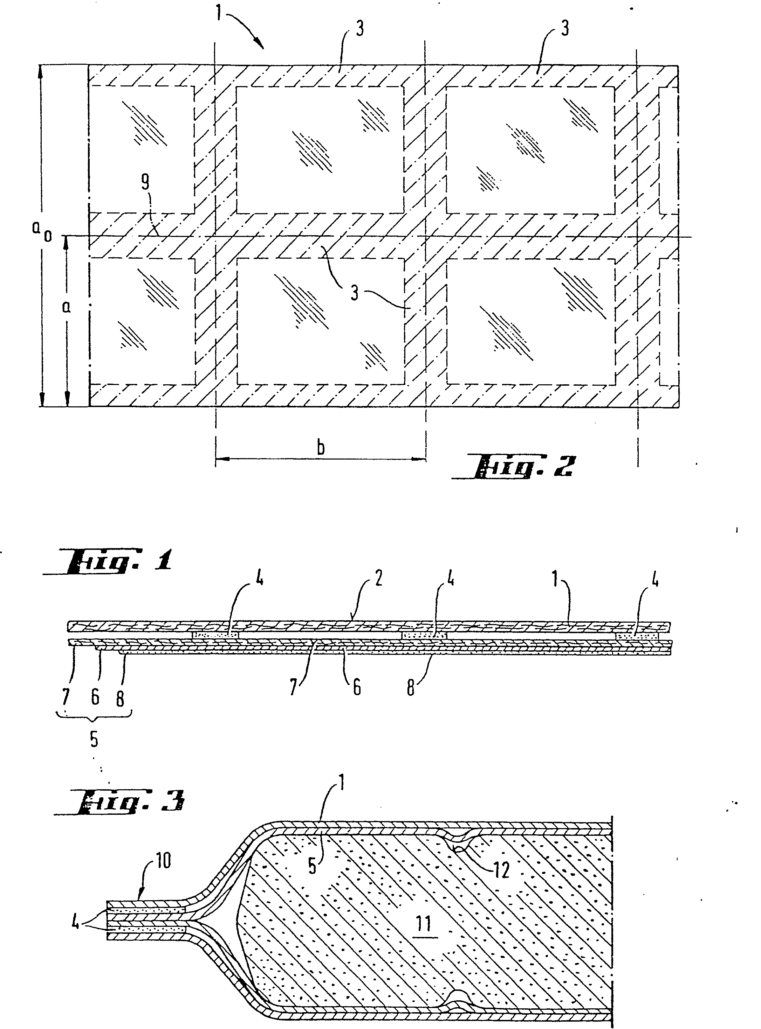

Bei der Herstellung des Schlauchbeutels schmiegt sich die durch das Verbundmaterial 5 gebildete innere Hüllenlage eng an die Oberfläche der Schokoladetafel 11 an, derart, daß sich die Oberflächenform der Schokoladetafel, wie z.B. die Riegelkerben i2 durch das Verbundmaterial 5 durchdrückt (Fig. 3). Eine Verbindung zwischen dem die innere Hüllenlage bildenden Verbundmaterial 5 und der die äußere Hüllenlage bildenden Papierbahn 1, besteht nur an den Flächenbereichen 3 (Fig. 2) an denen das zweilagige Verpackungsmaterial die durch Siegeinähte hergestellten Dopplungsbereiche, also z.B. die Flosse 10 bildet. Die äußere Hüllenlage, die auf diese Weise nicht gezwungen ist, sich an die innere Hüllenlage anzulegen, bildet wegen ihrer Steifigkeit eine weitgehende glatte ästhetisch ansprechende äußere Packungsoberfläche.

## Patentansprüche

1. Packung für Schokolade in Form einer Schlauchbeutelpackung, bei welcher zur Bildung einer Packungshülle die Ränder des Verpackungsmaterials an den durch Siegelnähte hergestellten Flossen (10) und/oder Finnen des Schlauchbeutels miteinander verbunden sind, dadurch gekennzeichnet, daß die Packungshülle aus zwei Hüllenlagen besteht, die nur in Teilbereichen, jedenfalls aber im Bereich (3) der Flossen (10) und/oder Finnen flächig miteinander verbunden sind, in anderen Teilbereichen aber nicht aneinander anliegen.

2. Schlauchbeutelpackung nach Anspruch 1, dadurch gekennzeichnet, daß die Verbindung der beiden Hüllenlagen durch eine Bindemittelschicht (4) hergestellt ist.

3. Verfahren zur Herstellung einer Schlauchbeutelpackung nach Anspruch 1 oder 2, dadurch gekennzeichnet, daß zunächst zur Herstellung des Materials der äußeren Hüllenlage ein flächiges und faltbares Verpackungsmaterial (1) in Bahnenform auf einer Seite mit dem die äußere Packungsaufmachung bildenden Aufdruck versehen und - hierzu registergerecht - auf der anderen Seite an Oberflächenbereichen (3), an denen bei der späteren SchlauchMeutelherstellung die Flossen (10) und/oder Finnen zu liegen kommen, mit einem Bindemittel (4) beschichtet wird und daß ein zweites flächiges und faltbares Verpackungsmaterial (5) in Bahnenform, welches an seiner einen Seite eine siegelfähige Oberflächenschicht (8) aufweist, an seiner anderen Seite mit dem Material der äußeren Hüllenlage an dessen mit Bindemittel (4) beschichteten Bereichen (3) verbunden wird und daß dieser Verbund schließlich als Material zur Herstellung der Schlauchbeutelpackung verwendet wird.

4. Verfahren nach Anspruch 3, dadurch gekennzeichnet, ddaß als Bindemittel (4) ein durch Hitze aktivierbarer Kleber eingesetzt wird.

## Claims

1. Pack for chocolate in the form of a tubular bag pack, in which, to form a pack wrapper, the edges of the packaging material are joined to one another at the fins (10) and/or tabs of the tubular bag which are produced by means of sealing seams, characterized in that the pack wrapper consists of two wrapper layers which are connected to one another over their surface in part regions only, but always in the region (3) of the fins (10) and/or tabs, but do not rest against one another in other part regions.

2. Tubular bag pack according to Claim 1, characterized in that the connection between the two wrapper layers is made by means of a binder layer (4).

3. Process for producing a tubular bag pack according to Claim 1 or 2, characterized in that, to produce the material of the outer wrapper layer, a sheet-like, foldable packaging material (1) in the form of a continuous sheet is first provided on one side with the imprint forming the outer pack presentation and, in register with this, on the other side is coated with a binder (4) in surface regions (3) where the fins (10) and/or tabs come to rest during the subsequent production of the tubular bags, in that a second sheet-like, foldable packaging material (5) in the form of a continuous sheet, which has a sealable surface layer (8) on one of its sides, is connected on its other side to the material of the outer wrapper layer in its regions (3) coated with binder (4), and in that this composite structure is finally used as a material for pboducing the tubular bag pack.

4. Process according to Claim 3, characterized in that an adhesive which can be activated by heat is used as binder (4).

## Revendications

1. Emballage pour chocolats sous la forme d'un emballage en forme de sac souple, dans lequel, pour la formation d'une enveloppe d'emballage, les bords de la matière d'emballage sont reliés entre eux sur les languettes (10) et/ou les lisières réalisées par des joints de scellement, du sac souple, caractérisé en ce que l'enveloppe d'emballage se compose de deux couches d'enveloppement, qui sont reliées entre elles à plat seulement dans des zones partielles de leur surface, mais en tout cas cependant dans la zone (3) des languettes (10) et/ou des lisières, alors que dans d'autres zones partielles, elles ne s'appliquent pas l'une contre l'autre.

2.- Emballage sous forme de sac souple selon la revendication 1, caractérisé en ce que la liaison des deux couches d'enveloppement est assurée par une couche de liant (4).

3.- Procédé de fabrication d'un emballage sous forme de sac souple selon l'une des revendications 1 ou 2, caractérisé en ce qu'initialement pour la fabrication de la matière de la couche extérieure d'enveloppement, une matière d'emballage (1) sous forme de feuille et repliable est pourvue d'un côté de l'impression formant la présentation extérieure de l'emballage et -en coïncidence- elle est revêtue d'un liant (4) de l'autre côté dans des zones (3) de sa surface où viendront se placer, lors de la fabrication ultérieure du sac souple, les languettes (10) et/ou les lisières, et en ce qu'une seconde matière d'emballage en feuille et repliable, qui comporte sur un de ses côtés une couche superficielle apte au scellement (8), est reliée par son autre côté avec la matière de la couche extérieure d'enveloppement dans ses zones (3) revêtues de liant (4) et en ce que cette structure composite est finalement utilisée comme matériau pour la fabrication de l'emballage sous forme de sac souple.

4.- Procédé selon la revendication 3, caractérisé en ce que l'on utilise comme liant (4) un adhésif pouvant être activé par chauffage.

Fig. 2

Fig. 1

Fig. 3